# EUROPÄISCHE PATENTSCHRIFT

(11) **EP 0 815 718 B1**
(45) Veröffentlichungstag und Bekanntmachung des Hinweises auf die Patenterteilung: **25.04.2001**
(21) Anmeldenummer: 97109980.9
(22) Anmeldetag: 19.06.1997
(51) Int. Cl.: A01F 15/07

(54) **Rundballenpresse**
Roundbaler
Presse à balles rondes

(30) Priorität: 02.07.1996 DE 19626526
(43) Veröffentlichungstag der Anmeldung: 07.01.1998
(73) Patentinhaber: Maschinenfabrik Bernard Krone GmbH, 48480 Spelle (DE)
(72) Erfinder: Krone, Bernard, 48480 Spelle (DE); Ahler, Wilhelm, 48703 Stadtlohn (DE)

(56) Entgegenhaltungen:
- EP-A- 0 225 398
- DE-U- 29 516 789
- FR-A- 2 566 993
- US-A- 5 243 806
- US-A- 5 581 973

## Beschreibung

Die Erfindung betrifft eine Rundballenpresse zur Herstellung von zylindrischen Ballen aus Heu, Stroh, angewelktem Grüngut oder dgl. landwirtschaftlichen Erntegütern nach den im Oberbegriff des Patentanspruches 1 angegebenen Merkmalen. Nachdem ein Ballen in der Wickelkammer eine vorgegebene Preßdichte erreicht hat, wird dieser mit einer Hüllbahn umfangsseitig eingewickelt und dadurch zum einen gegen Auseinanderfallen und zum anderen gegen Witterungseinflüsse geschützt. Dazu ist es erforderlich, daß die Umfangsfläche des Ballens beim Umhüllen vollständig abgedeckt wird.

In der DE 40 37 040 C2 wird dazu vorgeschlagen, im Bereich zwischen einer abgebremsten Vorratsrolle und einem Vorzugswalzenpaar die Hüllbahn aus ihrer geradlinigen Lage durch eine einer Führungsschulter entsprechenden Leitfläche oder durch einen Walzenkörper mit schräg zulaufenden Seitenbereichen in eine dachförmige Lage zu überführen. Dadurch soll eine seitliche Streckung der Hüllbahn auf eine Breite gewährleistet werden, mit der eine vollständige Abdeckung der Umfangsfläche des fertigen Ballens möglich ist. Wie die Praxis zeigt, wird eine Teilstreckung der Hüllbahn durch das Abgleiten der äußeren Hüllbahnstreifen an der schiefen Ebene der Führungsschulter erreicht. Eine vollständige Abdeckung der Umfangsfläche des fertigen Ballen ist damit jedoch nicht gewährleistet.

Weiterhin wird in der eigenen, älteren DE 40 12 739 C2 eine Vorrichtung zur Spreizung einer um einen fertigen Ballen zu wickelnden Hüllbahn vorgeschlagen, welche aus zumindest zwei, jeweils einem Hüllbahnseitenbereich zugeordnete Doppelklemmrollenspreizkörper mit nach außen gerichteter Arbeitsrichtung besteht. Bei der Zuführung der Hüllbahn an eine Abzugsvorrichtung werden auf die äußeren Hüllbahnstreifen der Hüllbahn beim Durchlaufen der Doppelklemmrollenspreizkörper eine Querkraft übertragen, so daß dadurch eine Spreizung der Hüllbahn auf die zum vollständigen Umwickeln des Ballens erforderliche Breite erreicht wird. Ein Mangel der beschriebenen Vorrichtung ist in dem erhöhten Bauaufwand sowie in der nicht sehr benutzerfreundlichen Handhabung beim Einführen der Hüllbahn in die Doppelklemmrollenspreizkörper zu sehen.

In vorteilhafter Weise wird hier gemäß einer weiteren eigenen, älteren DE 295 16 789 U1 bereits Abhilfe geschaffen, indem bei einer gattungsgemäßen Rundballenpresse ein Ballen nach seiner Fertigstellung mit einem Abschnitt einer Hüllbahn, vorzugsweise einer Netzbahn umwickelt, wird. Die Hüllbahn wird von einer abbremsbaren Vorratsrolle abgezogen. Die Einleitung dieses Vorganges erfolgt über eine Abzugsvorrichtung, mit der der von der Vorratsrolle abgezogene Hüllbahnabschnitt durch eine Gutzuführöffnung einer Ballenwickelkammer zugeführt wird, bis der Hüllbahnabschnitt von dem sich drehenden Ballen erfaßt wird. Von nun an wird die Hüllbahn von dem sich drehenden Ballen von der Vorratsrolle abgezogen. Nachdem ein bestimmter Umwickelungsgrad erreicht ist, wird die Hüllbahn von einer der Abzugsvorrichtung zugeordneten Schneidvorrichtung abgeschnitten.

Damit bei der Umwickelung des fertiggestellten Ballens auch die gesamte Umfangsfläche von der Hüllbahn abgedeckt wird, ist der Abzugsvorrichtung eine, die Hüllbahn breitstreckende Einrichtung zugeordnet, welche in Bezug zur Abzugsrichtung der Hüllbahn der Abzugsvorrichtung vor- oder nachgeordnet sein kann. Die breitstrekkende Einrichtung besteht dabei aus einem sich über die Breite des zu umhüllenden Ballens erstreckenden Umlenkelement, an dessen Enden sich unter einem Anstellwinkel zur Längsmittelachse des Umlenkelementes frei drehbar gelagerte Spreizelemente anschließen. Bei der Umwickelung des Ballens wird die breitstreckende Einrichtung von der Hüllbahn umschlungen und dadurch werden die Spreizelemente in eine Drehbewegung versetzt. Bei diesem Vorgang wird der Hüllbahn von den Spreizelementen zwischen einer Auflaufstelle und einer Ablaufstelle eine Spreizung dadurch erteilt, daß die Hüllbahn der Drehbewegung der Spreizelemente folgt und somit in ihrer Breite gestreckt wird.

Eine besondere Bedeutung im Hinblick auf die erreichbare Spreizung kommt der Größe des Anstellwinkels der Spreizelemente gegenüber der Längsmittelachse des Umlenkelementes zu.

Das Umlenkelement der breitstreckenden Einrichtung ist verdrehfest am Gehäuse der Rundballenpresse angebracht und dient als Halterung der Spreizelemente. In den Endbereichen des als Rohrkörper mit einem kreisrunden Querschnitt ausgebildeten Umlenkelementes sind Halterungen vorgesehen, in denen eine Welle zur Aufnahme und Lagerung der Spreizelemente arretierbar ist. Die Spreizelemente der breitstreckenden Einrichtung sind als Rollenkörper mit einer Oberflächenbeschichtung aus einem elastischen Material, vorzugsweise Gummi, ausgeführt. In der Praxis hat sich eine derartige breitstreckende Einrichtung mit Rollenkörpern bewährt.

In den Figuren der DE 295 16 789 U1 ist ferner eine Bremseinrichtung dargestellt, die der Materialrolle für das Hüllmaterial zugeordnet ist. Die Bremsvorrichtung sorgt für eine gleichbleibende Abzugskraft zum Abrollen des Hüllmaterials von der Materialrolle. Sie hat bereits ein Bremsrad, welches fest mit einem Aufnahmedorn für eine Materialrolle verbunden ist. Ein an einem abgefederten Bremshebel befindlicher Bremsschuh wirkt reibschlüssig mit dem Bremsrad zusammen. Über ein sich über die Breite der Rundballenpresse erstreckendes und am Bremshebel und an Seitenwänden befestigtes Umlenkrohr für die Hüllbahn wird die Bremskraft auf Grund der Abzugskraft für die Hüllbahn geregelt. Auch eine derartige Bremseinrichtung hat sich in der Praxis bewährt.

Um einen günstigen Umschlingungsbereich für eine Starterrolle einer Abzugs- und Zuführungsvorrichtung, wie sie ebenfalls in der DE 295 16 789 U1 dargestellt ist, zu erreichen, wird ferner in der Praxis einer Starterrolle eine Umlenkstange oder ein Umlenkrohr zugeordnet.

Alle diese Umlenkkörper führen die Hüllbahn, beispielsweise eine Netzbahn in verschiedene Richtungen, so daß hier viel Bauraum für die gesamte Unterbringung der Umhüllungsvorrichtung erforderlich ist. Ferner beeinflussen die Umlenkkörper selbst die Herstellungskosten. Auch muß von einer Bedienungsperson beim Einlegen einer neuen Materialrolle (Netzrolle) das Hüllmaterial den Umlenkkörpern folgend eingezogen werden.

Es ist Aufgabe der vorliegenden Erfindung, eine Rundballenpresse der eingangs genannten Art zu schaffen, bei der ein im Wickelraum fertig gerollter Ballen eine umfangsseitige vollflächige Umhüllung über eine Vorrichtung erhält, die mit baulich einfachen Mitteln und kostengünstig zu fertigen ist und die wenig Bauraum beansprucht. Ferner soll die Vorrichtung beim Nachlegen von Hüllmaterial leicht zu handhaben sein.

Zur Lösung der erstgenannten Aufgabe zeichnet sich die Rundballenpresse der eingangs genannten Art durch die im kennzeichnenden Teil des Anspruchs 1 angegebenen Merkmale aus. Hinsichtlich einer vorteilhaften Ausgestaltung der Rundballenpresse nach der Erfindung wird auf die Ansprüche 2 bis 21 verwiesen. Hierbei ist eine besondere Ausgestaltung der Rundballenpresse in einer Lösung nach Anspruch 3 zu sehen. Zur Lösung der zweitgenannten Aufgabe zeichnet sich die Rundballenpresse durch die Merkmale der Ansprüche 19 bis 21 aus.

Eine besondere Gestaltung einer Umhüllungsvorrichtung, wie sie in der eigenen, älteren DE 295 16 789 U1 näher beschrieben ist und eine Zusammenfassung bzw. Vereinigung von verschiedenen Umlenkkörpern und deren besondere Zuordnung und bewegliche Aufhängung zwischen Seitenwänden des Gehäuses der Rundballenpresse führen zu einer Verringerung des benötigten Bauraumes und zu einer direkten, geradlinigen Führung des Hüllmaterials von der gebremsten Materialrolle zu einer Abzugs- und Zuführungsvorrichtung, deren Vorzugswalze auch noch günstig von der Hüllbahn aus Netz umschlungen wird.

Auf Grund der schwenkbeweglichen Aufhängung der die Hüllbahn breitstreckenden Einrichtung wird mit Hilfe eines Verbindungsgliedes, welches als Zug- oder Schubstange ausgebildet sein kann, eine der Materialrolle zugeordnete Bremseinrichtung bestehend aus einem Bremsrad und einem Bremshebel mit Bremsschuh in Abhängigkeit von der Größe der Abzugskraft für die Hüllbahn betrieben. Die Bremseinrichtung erhält über eine beispielsweise mit einer Gewindespindel ausgebildeten Feder am Bremshebel oder an dem Verbindungsglied eine Grundeinstellung, so daß der in der Rundballenpresse gewickelte Rundballen immer mit gleichbleibender Zugspannung im Hüllmaterial umwickelt wird.

Damit die Rundballenpresse bezüglich ihrer Umhüllungsvorrichtung von ihrer Bedienung her günstig zugängig ist, wie dieses beispielsweise beim Wechsel einer Materialrolle aus Netz der Fall ist und auch für eine Garnbindung verwendbar ist, ist die ein Verbindungsglied bildende Zug- und Schubstange besonders mit einer der Halterungen der breitstreckenden Einrichtung verbunden. Hierbei befindet sich ein Führungsglied in Form eines Bolzens in einer in der Zug- und Schubstange vorgesehenen Kulissenführung. Die Kulissenführung hat die Form eines aus der griechischen Schrift bekannten großen Sigma (Σ) und weist zwei Haltepositionen auf, in denen der Bolzen der Halterung drehbar arretiert werden kann. Die Arretierung wird von derselben Feder gehalten, die bereits die Grundeinstellung der Bremseinrichtung bewirkt, indem die Feder exzentrisch zu einer zweiten Drehachse der Zug- und Schubstange an dieser und am Gehäuse der Rundballenpresse gehaltert wird. In einer Betriebsstellung wirkt die Zug- und Schubstange über den Bolzen der Halterung mit der Halterung selbst wie ein Kniegelenk zusammen, so daß Zug- und Schubkräfte von der die Hüllbahn breitstreckenden Einrichtung auf die Bremseinrichtung übertragen werden können. Zum Wegschwenken der die Hüllbahn breitstreckenden Einrichtung zur Neueinführung eines Endes einer Materialrolle bei stehender Rundballenpresse oder zur Überführung in eine Ruhestellung beim Umwickeln eines Rundballens mit Garn (Garnbindung erfolgt mit einer Zusatzausrüstung) wird die Zug- und Schubstange, insbesondere die Kulissenführung auf dem Bolzen der Halterung in der vorgegebenen Fahrtrichtung der Rundballenpresse manuell gegen Federkraft nach vorne bewegt und gleichzeitig die die Hüllbahn breitstreckende Einrichtung in der Kulissenführung nach oben bewegt und danach in der oberen Halteposition arretiert. Mit einem weiteren gefederten Handhebel kann eine der Vorzugwalzen einer Abzugs- und Zuführungsvorrichtung verschwenkt werden. Auf einfache Weise läßt sich nun das Ende der Materialrolle zwischen die Vorzugwalzen einführen. Die die Hüllbahn breitstreckende Einrichtung kann danach in umgekehrter Reihenfolge der einzelnen manuellen Schritte wieder in Betriebsstellung gebracht werden. Sie kann aber auch bei einem Wechsel von beispielsweise einer Netzbindung auf eine Garnbindung in der oberen Halteposition arretiert verbleiben.

Neben den oben bereits erwähnten Vorteilen eines günstigen Bauraumes wird somit auch noch eine optimale Handhabung der Umhüllungsvorrichtung erreicht.

Die weitere Beschreibung der Erfindung erfolgt an Hand eines Ausführungsbeispiels. In der dazugehörigen Zeichnung stellen im einzelnen dar:
- Fig. 1: eine schematische Seitenansicht einer Rundballenpresse mit eingebautem Ausführungsbeispiel einer Umhüllungsvorrichtung einschließlich der die Hüllbahn breitstreckenden Einrichtung und der Bremseinrichtung für die Materialrolle nach der Erfindung;
- Fig.2: eine vergrößerte Detailansicht der Einzelheit X in Fig. 1;
- Fig.3: eine weitere vergrößerte Detailansicht der Einzelheit Y in Fig. 2;
- Fig.4: eine Ansicht der die Hüllbahn breitstrekkenden Einrichtung in Richtung des Pfeiles Z in Fig. 3 gesehen und teilweise im Schnitt dargestellt und mit in die Schnittebene verschwenkten Rollenkörper;
- Fig.5: eine Seitenansicht eines Rollenkörpers gemäß Fig. 4 und in Blickrichtung W zur Darstellung des Umschlingungswinkels der Hüllbahn;
- Fig.6: eine perspektivische, teilweise abgebrochene Darstellung der die Hüllbahn breitstreckenden Einrichtung mit einem Abschnitt einer Hüllbahn aus Netz;

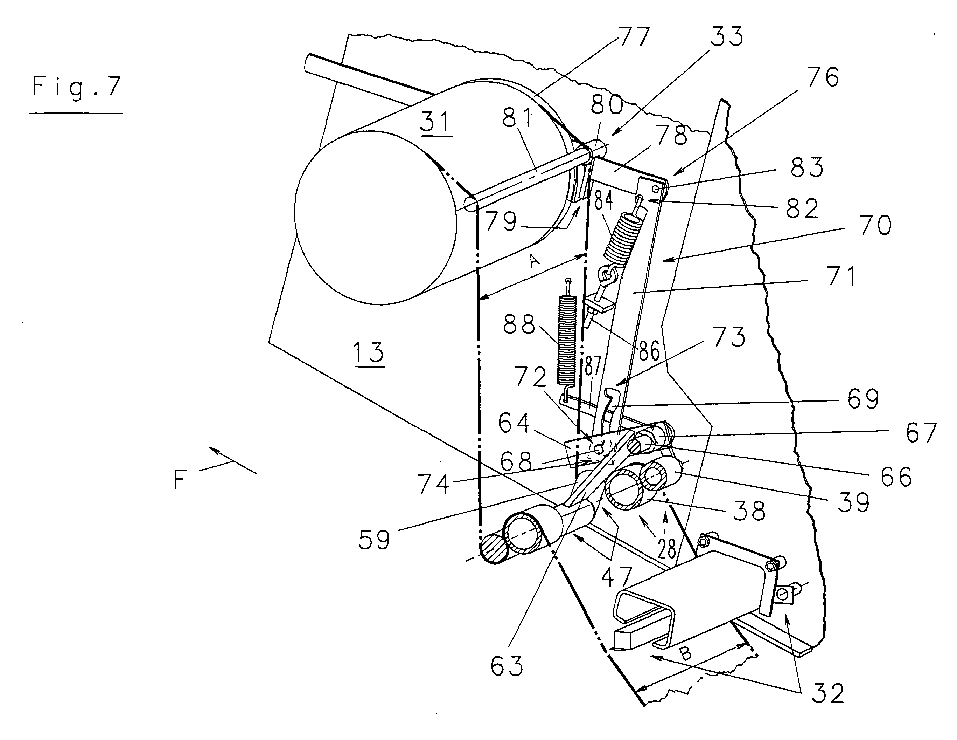

- Fig.7: eine perspektivische, teilweise abgebrochene Darstellung der rechten seitlichen Innenwand mit den Details der Umhüllungsvorrichtung und einer Blickrichtung aus der Ballenwickelkammer nach rechts und in Fahrtrichtung der Rundballenpresse.

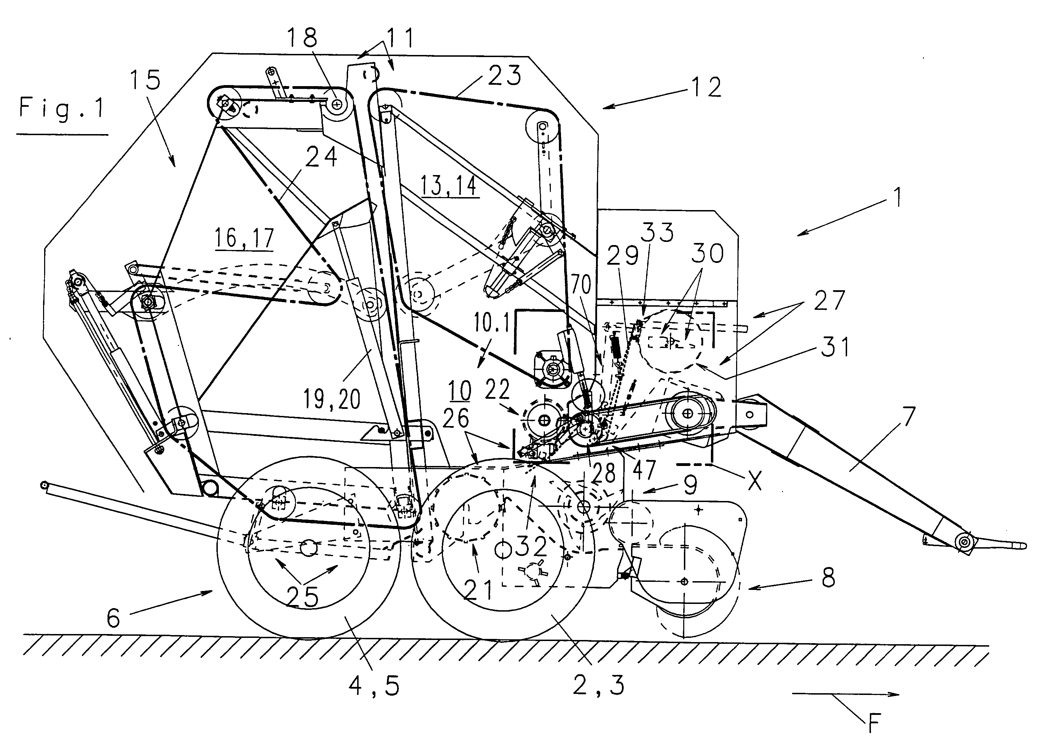

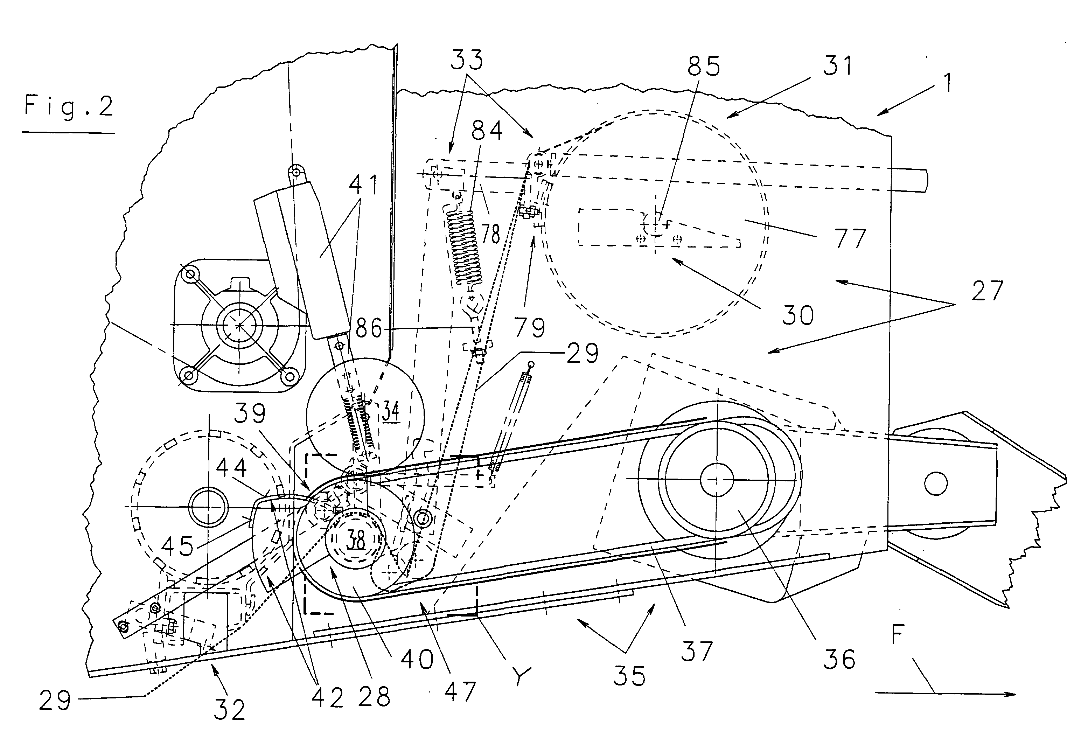

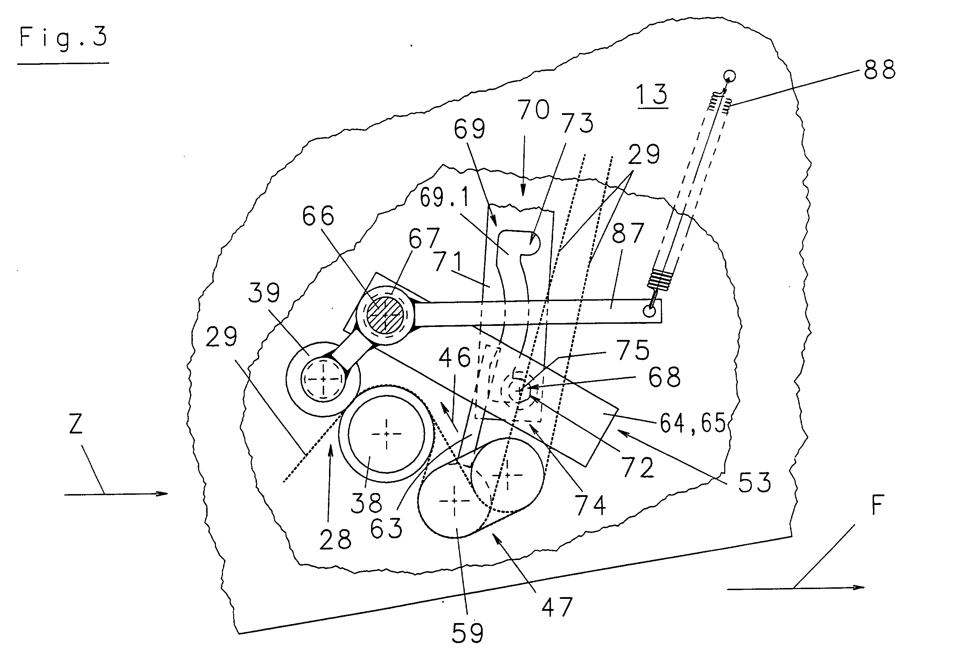

Die in Fig. 1 veranschaulichte Rundballenpresse 1 zum Aufnehmen und Pressen von Heu, Stroh, angewelktem Gras oder dgl. landwirtschaftlichem Erntegut zu zylinderförmigen Ballen stützt sich über Laufräder 2, 3 und 4, 5 in Form einer Tandemachse 6 gegenüber dem Erdboden ab und kann mittels einer Deichsel 7 an einen nicht dargestellten, landwirtschaftlichen Ackerschlepper oder dgl. Zugmaschine angehängt werden. Der Antrieb der Rundballenpresse 1 erfolgt über eine ebenfalls nicht dargestellte Gelenkwellenverbindung, die antriebsmäßig mit dem Ackerschlepper zu koppeln ist. Die Rundballenpresse 1 beinhaltet im wesentlichen eine Aufsammelvorrichtung 8 sowie eine dieser nachgeschalteten Förder- und Schneidvorrichtung 9 und eine einen Wickelraum 10 bildende Ballenwickelkammer 10.1 zur Formung von Rundballen mit unterschiedlichen Ballendurchmessern. Gleichermaßen ist es aber auch möglich, der Erfindung eine Rundballenpresse mit anderer Bauart zugrunde zu legen, insbesondere eine Rundballenpresse mit unveränderlicher Größe der Ballenwickelkammer. Die Ballenwickelkammer 10.1 der Rundballenpresse 1 setzt sich aus einem Gehäuse 11 mit einem vorderen Gehäuseabschnitt 12 mit den vorderen Seitenwänden 13, 14 und einem hinteren Gehäuseabschnitt 15 mit den hinteren Seitenwänden 16, 17 zusammen. Der hintere Gehäuseabschnitt 15 läßt sich mittels eines Schwenklagers 18 und seitlich an der Rundballenpresse 1 angebrachten Hydraulikzylindern 19, 20 gegenüber dem vorderen Gehäuseabschnitt 12 verschwenken, so daß ein fertig gewickelter Rundballen aus der Ballenwikkelkammer 10.1 ausgeworfen werden kann. Die Umfangsoder Mantelfläche der Ballenwickelkammer 10.1 wird im unteren Bereich von einer Walze 21 und im oberen bzw. rückwärtigen Bereich von einer weiteren Walze 22 sowie einer vorderen Wickelkette 23 und einer hinteren Wickelkette 24 begrenzt. Zusammen ergeben die Walze 21, die Walze 22, die vordere Wickelkette 23 und die hintere Wickelkette 24 die Wickelelemente 25. Oberhalb der Förder- und Schneidvorrichtung 9 und zwischen der Walze 21 und der Walze 22 befindet sich eine Gutzuführöffnung 26, durch welche das Erntegut in die Ballenwickelkammer 10.1 gelangt. Bei stetiger Erntegutzufuhr vergrößert sich der Wickelraum 10 der Ballenwickelkammer 10.1 bis auf eine vorgegebene Größe und wickelt und preßt hierbei einen Rundballen. Fig. 1 zeigt die Rundballenpresse zu Beginn eines Wickelvorganges mit leerer Ballenwickelkammer 10.1. Im Bereich des vorderen Gehäuseabschnittes 12 des Gehäuses 11 der Rundballenpresse 1 ist eine Umhüllungsvorrichtung 27 vorhanden, die insbesondere in ihrer Gesamtheit in Fig. 2 und 3 dargestellt ist. Die Umhüllungsvorrichtung 27 besteht aus einer Abzugs- und Zuführungsvorrichtung 28 zum Abziehen einer Hüllbahn 29 bestimmter Länge von einer in einem Vorratsbehälter (nicht dargestellt) und/oder einem Rollenhalter 30 gelagerten Materialrolle 31. Der Abzugs- und Zuführungsvorrichtung 28 ist wiederum eine Schneideinrichtung 32 zuoder nachgeordnet. Die Schneideinrichtung 32 befindet sich in der in Fig. 2 dargestellten Form in der Schneidendstellung. Der Materialrolle 31, die beispielsweise eine Netzrolle sein kann, ist eine Bremseinrichtung 33 zugeordnet, die auch in Verbindung mit dem Rollenhalter 30 oder direkt auf die Materialrolle wirken kann. Zur Einleitung eines Umwickelungsvorganges ist die Abzugsund Zuführungsvorrichtung 28 antriebsmäßig mit einem mittels einer Spannrolle 34 zu- und abschaltbaren Riementrieb 35 bestehend aus einer Antriebsriemenscheibe 36, einem Keilriemen 37 und einer mit einer Vorzugswalze 38 antriebsmäßig verbundenen antreibbaren Riemenscheibe 40 verbunden. Die Antriebsverbindung der Riemenscheibe 40 mit der Vorzugswalze 38 erfolgt über einen Freilauf, so daß die angetriebene Vorzugswalze 38 auch über die Hüllbahn 29, vom Rundballen selbst gezogen, schneller umlaufen kann. Die Antriebsriemenscheibe 36 steht in direkter Antriebsverbindung mit dem Hauptgetriebe (nicht dargestellt) der Rundballenpresse 1 und ist ständig angetrieben. Die Spannrolle 34 des Riementriebes 35 wird mittels eines Stellgliedes 41 aus einer Ausgangslage in eine den Keilriemen 37 des Riementriebes 35 spannende Lage überführt und es wird hierbei die Schneideinrichtung 32 über ein auf einer Steuerkurve 42 geführtes Steuerungselement 43 aus einer eine Ruhelage bildenden Schneidendstellung in eine mit einer Durchlaufbahn der Hüllbahn 29 nicht in Eingriff stehende Schneidausgangsstellung überführt und arretiert. Nach einem vorgegebenen Umhüllungsgrad des Ballens, der über elektrische Meßeinrichtungen oder dgl. bestimmt werden kann, wird von dem Stellglied 41 die Spannrolle 34 aus der den Keilriemen 37 des Riementriebes 35 spannenden Lage zurück in die Ausgangslage bewegt. Mit dieser Bewegung gekoppelt, wird die Schneideinrichtung 32 schlagartig durch einen Abwurf des Steuerungselementes 43 von der Steuerkurve 42 infolge einer schräg zur Lauffläche 44 der Steuerkurve 42 angeordneten Abwurfkante 45 aus der Schneidausgangsstellung in eine Schneidendstellung gebracht. Dieser Vorgang wiederholt sich bei der Bildung jedes einzelnen Rundballens.

Damit bei der Umwickelung eines fertig gerollten Rundballens in der Ballenwickelkammer 10.1 die gesamte Umfangsfläche von der Hüllbahn 29 abgedeckt wird, ist es gemäß der eigenen, älteren DE 295 16 789 U1 bekannt, der Abzugs- und Zuführungsvorrichtung 28, in Abzugsrichtung 46 gesehen, eine die Hüllbahn 29 breitstreckende Einrichtung 47 vorzuordnen. Diese besteht im wesentlichen aus einem sich nahezu über die Ballenbreite erstreckenden Umlenkelement 48, an dessen Enden sich unter einem Anstellwinkel α zur Längsmittelachse 49 der breitstreckenden Einrichtung 47 Spreizelemente 50, 51 anschließen. Das Umlenkelement 48 der breitstreckenden Einrichtung 47 ist dabei über nachfolgend noch beschriebene Halterungen 52, 53 an Seitenwänden 13, 14 des vorderen Gehäuseabschnittes 12 des Gehäuses 11 befestigt.

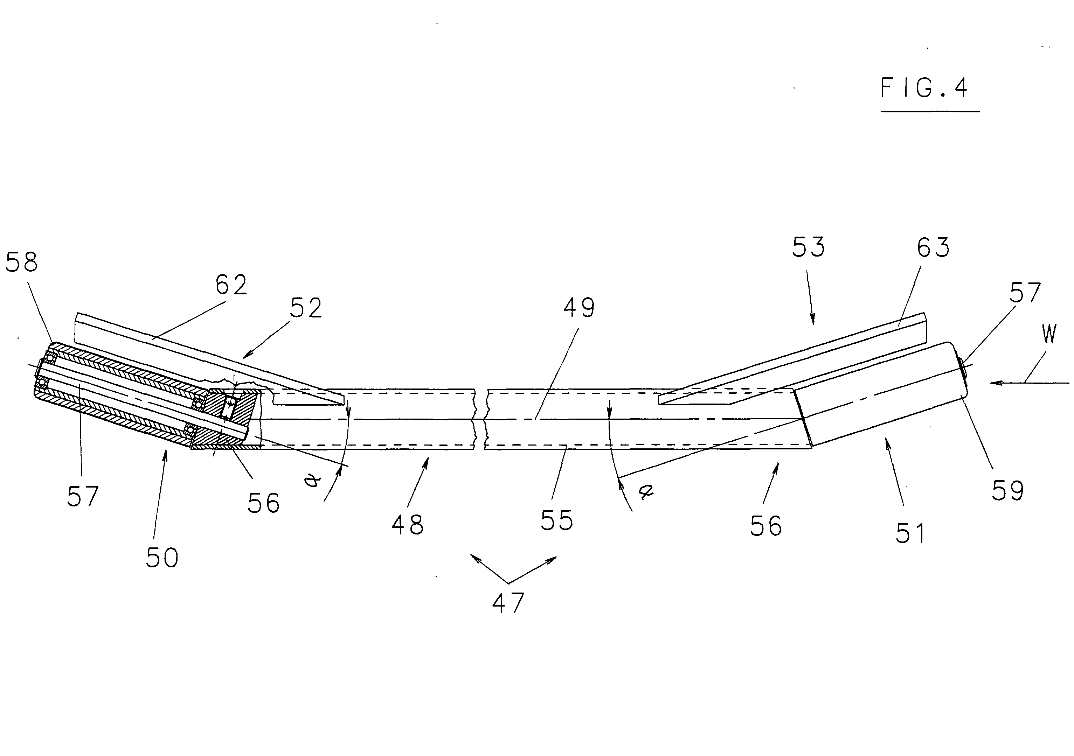

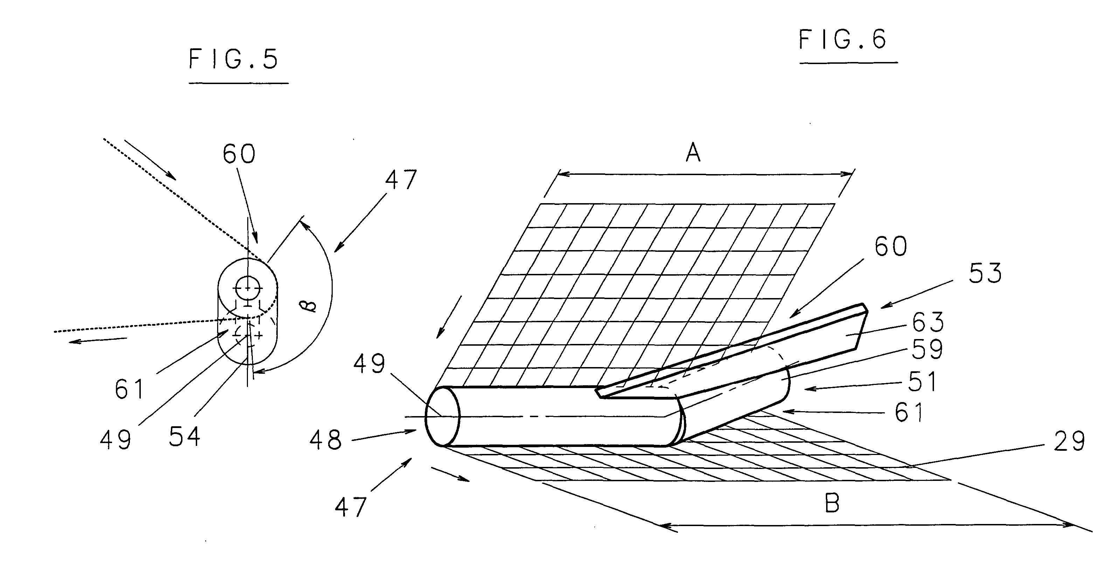

Fig. 4 zeigt eine Teilschnittdarstellung der breitstrekkenden Einrichtung 47 entlang der gemeinsamen Symmetrieebene 54 (Fig. 5), aus der der eigentliche Aufbau verdeutlicht wird. So ist in diesem Ausführungsbeispiel das Umlenkelement 48 als Rohrkörper 55 mit einem kreisrunden Querschnitt ausgebildet. An den beiden Enden des Rohrkörpers 55 befinden sich Halterungen 56, in denen jeweils eine Welle 57 zur Lagerung der als Rollenkörper 58, 59 ausgebildeten Spreizelemente 50, 51 arretierbar ist. Die Rollenkörper 58, 59 sind mittels Kugellager auf der Welle 57 frei drehbar gelagert und verfügen über eine Oberflächenbeschichtung aus einem elastischen Material, vorzugsweise Gummi. Es ist auch vorstellbar, die gesamten Rollenkörper 58, 59 aus einem elastischen Kunststoff herzustellen.

Um eine gute Haftung der Hüllbahn 29 auf den Rollenkörpern 58, 59 zu erreichen, ist die Einbaulage der breitstreckenden Einrichtung 47 zur Materialrolle 31 und zur Abzugs- und Zuführungsvorrichtung 28 von besonderer Bedeutung. Vorzugsweise liegt der Umschlingungswinkel β (Fig. 5) zwischen 90 und 180 Grad. Durch die die Hüllbahn 29 breitstreckende Einrichtung 47 erhält die Hüllbahn 29 zwischen einer Auflaufstelle 60 und einer Ablaufstelle 61 auf einem Rollenkörper 58, 59 eine Spreizung S, die sich aus der Breite B minus der Breite A ergibt (Fig. 6).

Die Halterungen 52, 53 an dem Rohrkörper 55 der breitstreckenden Einrichtung 47 sind nun derart spiegelbildlich zueinander ausgebildet und weisen ein nach außen und oben zeigendes Flacheisen 62, 63 auf, das etwa rechtwinkelig und etwa mittig auf parallel zu den Seitenwänden 13, 14 ausgerichteten Hebelteilen 64, 65 durch eine Schweißverbindung od. dgl. verbunden ist. An dem entgegen der Fahrtrichtung F zeigenden Ende sind die Hebelteile 64, 65 auf einer Achse 66 mittels einer Büchse 67 an den Seitenwänden 13, 14 schwenkbeweglich gelagert. An dem nach vorne in Fahrtrichtung F zeigenden Ende ist an einem der Hebel 64 oder 65 ein Führungsglied in Form eines Bolzens 68 vorhanden. Dieser Bolzen 68 greift in eine Kulissenführung 69, die in einer als Verbindungsglied 70 mit der Bremsvorrichtung 33 wirkenden Zug- und Schubstange 71 vorhanden ist. Die Kulisse 69.1 der Kulissenführung 69 hat die Form eines aus der griechischen Schrift bekannten großen Sigma (Σ) und weist zwei Haltepositionen 72, 73 auf, in denen der Bolzen 68 der Halterung 52 oder 53 drehbar arretiert werden kann, so daß eine dreh- und schwenkbewegliche Verbindungsstelle 74 mit einer Drehachse 75 zwischen der Zug- und Schubstange 71 und der Halterung 52 oder 53 entsteht.

Die als Verbindungsglied 70 wirkende Zug- und Schubstange 71 ist an ihrem nach oben zeigenden Ende mit der bereits erwähnten Bremsvorrichtung 33 über ein Gelenk 76 wiederum drehbeweglich verbunden. Die als Reibbremse arbeitende Bremsvorrichtung 33 selbst besteht aus einem Bremsrad 77 und einem diesem zugeordneten Bremshebel 78 mit Bremsschuh 79. Der Bremshebel 78 ist einenendes über eine Büchse 80 auf einer Achse 81 gelagert und anderenendes in dem Gelenk 76 in der Form eines Kniegelenkes mit der Zug- und Schubstange 71 verbunden. Die Achse 81 ist gleichzeitig eine Führungsstange für die Hüllbahn 29. Durch eine exzentrische Aufhängung 82 zur Gelenkachse 83 wirkt eine Feder 84 einmal als Feder für die Bremskraft und einmal als Feder für die Arretierung der Haltepositionen 72, 73 in der Kulissenführung 69. Die Materialrolle 31 befindet sich auf einem Haltedorn 85 des Rollenhalters 30, der wiederum mit dem Bremsrad 77 drehfest verbunden ist. Über eine Gewindespindel 86 erhält das Bremsrad 77 bzw. die Bremseinrichtung 33 in Verbindung mit der Feder 84 eine Grundeinstellung für einen Umwickelungsvorgang.

Indem die die Hüllbahn 29 breitstreckende Einrichtung 47, wie es insbesondere in Fig. 2 und 3 dargestellt ist, zur Vorzugswalze 38 der Abzugs- und Zuführungsvorrichtung 28 tieferliegend und in Fahrtrichtung F vorgeordnet positioniert ist und ferner noch schwenkbeweglich aufgehängt ist, werden weitere Umlenkkörper, wie sie bei herkömmlichen Rundballenpressen 1 bekannt sind, überflüssig. Die Vorzugswalze 38 wird günstig von der Hüllbahn 29 umschlungen und dadurch der Transport der Hüllbahn 29 bei gebremster Materialrolle 31 und beim Start begünstigt. Von der Materialrolle 31 gelangt die Hüllbahn 29 auf direktem, geradlinigem Wege zu der breitstreckenden Einrichtung 47 und benötigt hierbei wenig Bauraum.
Die der Materialrolle 31 zugeordnete Bremseinrichtung 33 arbeitet nun in der Weise, daß diese über eine die Bremskraft aufbringende einstellbare Feder eine Grundeinstellung erhält. Wird nun von der Abzugs- und Zuführungseinrichtung 28 oder von dem Rundballen in der Rundballenpresse 1 selbst die Hüllbahn 29 gezogen, so entsteht in dieser eine Zugspannung, die von der Bremseinrichtung 33 beeinflußt wird. Dreht sich die Materialrolle nicht oder dreht sich diese sehr schwer, so wird über die Hüllbahn 29 die diese breitstreckende Einrichtung 47 geringfügig nach oben verschwenkt und löst hierbei über die Zug- und Schubstange 71 und den Bremshebel 78 die Bremseinrichtung 33, so daß die Materialrolle 31 leichter gedreht werden kann. Dieses Wechselspiel erfolgt ständig, so daß die Bremseinrichtung 33 in Abhängigkeit von der Größe der Abzugskraft für die Hüllbahn 29 betrieben wird. Der in der Rundballenpresse 1 gewikkelte Rundballen wird so immer mit gleichbleibender Zugspannung im Hüllmaterial umwickelt.

Damit die Rundballenpresse 1 bezüglich ihrer Umhüllungsvorrichtung 27 günstig bedienbar ist, wie dieses beispielsweise beim Wechsel einer Materialrolle 31 der Fall ist, ist die ein Verbindungsglied 70 bildende Zugund Schubstange 71, wie vorstehend bereits beschrieben, besonders ausgebildet. Bei stehender Rundballenpresse 1 kann eine Bedienungsperson die Zug- und Schubstange 71 am nach unten zeigenden Ende in Fahrtrichtung F gegen die Federkraft der Feder 84 verschwenken. Hierbei gelangt der Bolzen 68 in der Kulissenführung 69 aus seiner unteren Halteposition 72 und es kann nun die gesamte, die Hüllbahn 29 breitstreckende Einrichtung 47 um die Achse 66 der Hebelteile 64, 65 nach oben verschwenkt werden und der Bolzen 68 gelangt in die zweite obere Halteposition 73 in der Kulissenführung 69 und wird dort arretiert. Die breitstreckende Einrichtung 47 nimmt hierbei eine Ruheposition ein, in der sie beim Einziehen der Hüllbahn 29 nicht hinderlich ist. Ferner kann sie in dieser Position verbleiben, wenn die Umhüllungsvorrichtung 27 auf Garnbindung umgestellt wird, da die breitstreckende Einrichtung 47 dann nicht benötigt wird. Die Vorzugswalzen 38, 39 werden auch bei der Garnbindung benutzt.
Mit Hilfe eines Schwenkhebels 87 kann entgegen der Kraft einer Zugfeder 88 die Vorzugswalze 39 manuell um die Achse 66 verschwenkt und angehoben werden, so daß die Hüllbahn 29 leicht von der Materialrolle 31 aus zwischen die Vorzugswalzen 38, 39 gebracht werden kann. Nach dem Wiederanlegen der Vorzugswalze 39 an die Vorzugswalze 38 kann die die Hüllbahn 29 breitstreckende Einrichtung 47 aus der oberen Halteposition 73 wieder zurück in die Halteposition 72 verschwenkt werden, so daß ein neuer Umhüllungsvorgang eines Rundballens beginnen kann.

## Patentansprüche

1. Rundballenpresse (1) mit den Wickelraum (10) unter Belassung einer Gutzuführöffnung (26) umfangsseitig begrenzenden Wickelelementen (25) und einer Abzugsund Zuführungsvorrichtung (28) zum Abziehen einer Hüllbahn (29) bestimmter Länge von einer in einem Vorratsbehälter und/oder einem Rollenhalter (30) gelagerten Materialrolle (31) und zum Zuführen der Hüllbahn (29) in den Wickelraum (10) zwecks umfangsseitiger Umhüllung eines fertigen Ballens, wobei der Abzugs- und Zuführungsvorrichtung (28) eine Schneideinrichtung (32) und der Materialrolle (31) eine Bremseinrichtung (33) zugeordnet ist, mit einer die abgezogene Bahn vor dem Einlauf in den Wikkelraum (10) breitstreckenden Einrichtung (47), die quer zur Maschinenlängsachse angeordnet ist und zumindest die Breite des zu umhüllenden Ballens einnimmt, dadurch gekennzeichnet, daß die die Hüllbahn (29) breitstreckende Einrichtung (47) schwenkbeweglich am Gehäuse (11) der Rundballenpresse (1) gehaltert ist und auf Grund der Abzugskraft für die Hüllbahn (29) selbst eine Schwenkbewegung ausführt und derart mit der der Materialrolle (31) zugeordneten Bremseinrichtung (33) über Verbindungsglieder (70) gekoppelt ist, daß die Größe der Bremskraft von der Größe der Abzugskraft für die Hüllbahn (29) bestimmt wird.

2. Rundballenpresse nach Anspruch 1, dadurch gekennzeichnet, daß die Größe der Bremskraft und die Größe der Abzugskraft umgekehrt proportional sind.

3. Rundballenpresse nach Anspruch 1 und 2, dadurch gekennzeichnet, daß die die Hüllbahn (29) breitstrekkende Einrichtung (47) einer der Vorzugswalzen (38 oder 39) der Abzugs- und Zuführvorrichtung (28) als Umlenk- und/oder Führungswalze zugeordnet ist.

4. Rundballenpresse nach einem der Ansprüche 1 bis 3, dadurch gekennzeichnet, daß die die Hüllbahn (29) breitstreckende Einrichtung (47) ein sich wenigstens über die Breite des zu umhüllenden Ballens erstreckendes Umlenkelement (48) mit an dessen Enden sich anschließende, unter einem Anstellwinkel (α) zur Längsmittelachse (49) des Umlenkelementes (48) ausgerichtete, von der Hüllbahn (29) rotierend antreibbare und in einem Umschlingungsbereich zwischen einer Auflaufstelle (60) und einer Ablaufstelle (61) eine Spreizung der Hüllbahn (29) erzeugende Spreizelemente (50, 51) umfaßt.

5. Rundballenpresse nach Anspruch 4, dadurch gekennzeichnet, daß die die Hüllbahn (29) breitstreckende Einrichtung (47) eine derartige Anordnung am Gehäuse aufweist, aus der sich eine Umschlingung der Hüllbahn (29) mit einem Umschlingungswinkel (*β*) ergibt.

6. Rundballenpresse nach Anspruch 4 und 5, dadurch gekennzeichnet, daß die Größe der Spreizung (S) der Hüllbahn (29) von der Größe des Anstellwinkels (α) abhängt.

7. Rundballenpresse nach einem der Ansprüche 4 bis 6, dadurch gekennzeichnet, daß das Umlenkelement (48) der breitstreckenden Einrichtung (47) über Halterungen (52, 53) an Seitenwänden (13, 14) des Gehäuses (11) schwenkbar gelagert ist.

8. Rundballenpresse nach einem der Ansprüche 4 bis 7, dadurch gekennzeichnet, daß das Umlenkelement (48) als Rohrkörper (55) mit einem kreisrunden Querschnitt ausgebildet ist.

9. Rundballenpresse nach einem der Ansprüche 4 bis 8, dadurch gekennzeichnet, daß der Rohrkörper (55) als Halterung der Spreizelemente (50, 51) dient.

10. Rundballenpresse nach einem der Ansprüche 4 bis 9, dadurch gekennzeichnet, daß die Spreizelemente (50, 51) auf einer Welle (57) frei drehbar gelagert und über eine Halterung (56) mit dem Rohrkörper (55) verbunden sind.

11. Rundballenpresse nach einem der Ansprüche 4 bis 10, dadurch gekennzeichnet, daß die Spreizelemente (50, 51) als Rollenkörper (58, 59) ausgeführt sind.

12. Rundballenpresse nach einem der Ansprüche 4 bis 11, dadurch gekennzeichnet, daß die Rollenkörper (58, 59) eine Oberfläche aufweisen, welche mit einer Beschichtung aus einem elastischen Material versehen ist.

13. Rundballenpresse nach Anspruch 12, dadurch gekennzeichnet, daß die Rollenkörper (58, 59) eine Oberflächenbeschichtung aus Gummi haben.

14. Rundballenpresse nach einem der Ansprüche 4 bis 13, dadurch gekennzeichnet, daß die die Hüllbahn (29) breitstreckende Einrichtung (47) derartig ausgebildet ist, daß auch das Umlenkelement (48) frei drehbar in den Halterungen (52, 53) an den Seitenwänden (13, 14) des Gehäuses (11) gelagert ist.

15. Rundballenpresse nach einem der Ansprüche 1 bis 14, dadurch gekennzeichnet, daß es sich bei der der Materialrolle (31) zugeordneten Bremsvorrichtung (33) um eine Reibbremse handelt.

16. Rundballenpresse nach einem der Ansprüche 1 bis 15, dadurch gekennzeichnet, daß die Bremseinrichtung (33) ein Bremsrad (77) und einen diesem zugeordneten Bremshebel (78) mit Bremsschuh (79) aufweist, welcher über eine, ein Verbindungsglied (70) bildende Zug- und Schubstange (71) mit der die Hüllbahn (29) breitstreckende Einrichtung (47) schwenkbeweglich gekoppelt ist.

17. Rundballenpresse nach einem der Ansprüche 1 bis 16, dadurch gekennzeichnet, daß die ein Verbindungsglied (70) bildende Zug- und Schubstange (71) einenends eine dreh- und schwenkbewegliche Verbindungsstelle (74) mit einer Halterung (52 oder 53) der breitstreckenden Einrichtung (47) aufweist, die eine Lageveränderung der Drehachse (75) zwischen der Zug- und Schubstange (71) und der Halterung (52 oder 53) zuläßt.

18. Rundballenpresse nach Anspruch 17, dadurch gekennzeichnet, daß die dreh- und schwenkbewegliche Verbindungsstelle (74) aus einer Kulissenführung (69) gebildet wird, die wenigstens eine arretierbare Halteposition aufweist.

19. Rundballenpresse nach Anspruch 17 und 18, dadurch gekennzeichnet, daß die Kulissenführung (69) derart gestaltet ist, daß die Kulisse (69.1) in oder an der Zug- und Schubstange (71) und ein in der Kulisse (69.1) geführtes Führungsglied in einer Ausführung als Rolle, Bolzen (68) od. dgl. an der Halterung (52 oder 53) vorhanden ist.

20. Rundballenpresse nach einem der Ansprüche 17 bis 19, dadurch gekennzeichnet, daß die Kulissenführung (69) etwa der Form eines großen Sigma (Σ) der griechischen Schrift entspricht.

21. Rundballenpresse nach einem der Ansprüche 1 bis 20, dadurch gekennzeichnet, daß die Bremskraft der der Materialrolle (31) zugeordneten Bremseinrichtung (33) und die Kraft für eine Arretierung der Halteposition (72, 73) des Führungsgliedes in der Kulissenführung (69) der Zug- und Schubstange (71) von einer gemeinsamen Feder (84) übertragen wird.

## Claims

1. A round baling press (1) with winding elements (25) defining the periphery of the winding space (10) and leaving a material feed aperture (26) and with a pull-off and feed apparatus (28) for pulling a cover web (29) of specific length from a roll (31) of material held in a storage container and/or a roll holder (30) and for feeding the cover web (29) into the winding space (10) for the purpose of enclosing the periphery of a finished bale, a cutting means (32) being associated with the pull-off and feed apparatus (28) and a braking means (33) being associated with the roll (31) of material, with a means (47) for stretching wide the pulled-offweb before it enters the winding space (10) and being disposed crosswise to the longitudinal axis of the machine and occupying at least the width of the bale which is to be covered, characterised in that the means (47) for stretching wide the cover web (29) being supported in pivotally movable manner on the housing (11) of the round baling press (1) and itself performing a pivoting movement by virtue of the force for pulling off the cover web (29) and being so coupled via connecting members (70) to the braking means (33) associated with the material roll (31) that the level of the braking force is determined by the level of the force for pulling off the cover web (29).

2. A round baling press according to claim 1, characterised in that the level of the braking force and that of the pull-off force are inversely proportional.

3. A round baling press according to claim 1 and 2, characterised in that the means (47) for spreading wide the cover web (29) is associated with one of the advancing rollers (38 or 39) of the pull-off and feed apparatus (28) as a deflecting and/or guide roller.

4. A round baling press according to one of claims 1 to 3, characterised in that the means (47) of spreading wide the cover web (29) comprises a deflecting element (48) extending at least over the width of the bale which is to be covered and with, adjacent its ends and aligned at an angle (α) to the longitudinal central axis (49) of the deflecting element (48), spreading elements (50, 51) adapted to be rotatingly driven by the cover web (29) and producing a spreading of the cover web (29) in a looping zone between a run-on point (60) and a run-off point (61).

5. A round baling press according to claim 4, characterised in that the means (47) for spreading wide the cover web (29) is so disposed on the housing that the result is a looping of the cover web (29) at a looping angle (β).

6. A round baling press according to claim 4 and 5, characterised in that the amount of spread (S) of the cover web (29) is dependent upon the value of the angle (α).

7. A round baling press according to one of claims 4 to 6, characterised in that the deflecting element (48) of the spreading means (47) is pivotally mounted on side walls (13, 14) of the housing (11) via supports (52, 53).

8. A round baling press according to one of claims 4 to 7, characterised in that the deflecting element (48) is constructed as a tubular body (55) which has a circular cross-section.

9. A round baling press according to one of claims 4 to 8, characterised in that the tubular body (55) serves to support the spreading elements (50, 51).

10. A round baling press according to one of claims 4 to 9, characterised in that the spreading elements (50, 51) are mounted to rotate freely on a shaft (57) and are connected to the tubular body (55) via a support (56).

11. A round baling press according to one of claims 4 to 10, characterised in that the spreading elements (50, 51) are constructed as rolling bodies (58, 59).

12. A round baling press according to one of claims 4 to 11, characterised in that the rolling bodies (58, 59) have a surface provided with a coating of an elastic material.

13. A round baling press according to claim 12, characterised in that the rolling bodies (58, 59) have a surface coating of rubber.

14. A round baling press according to one of claims 4 to 13, characterised in that the means (47) of spreading wide the cover web (29) are so constructed that also the deflecting element (48) is mounted to rotate freely in the supports (52, 53) on the side walls (13, 14) of the housing (11).

15. A round baling press according to one of claims 1 to 14, characterised in that the braking means (33) associated with the material roll (31) is a friction brake.

16. A round baling press according to one of claims 1 to 15, characterised in that the braking means (33) comprises a brake wheel (77) and, associated with this latter, a brake lever (78) with a brake shoe (79) which is coupled in pivotally movable manner to the means (47) for spreading wide the cover web (29) via a push-and-pull rod (71) which forms a connecting member (70).

17. A round baling press according to one of claims 1 to 16, characterised in that the push-and-pull rod (71) which forms a connecting member (70) has at one end a rotatably and pivotally movable connection (74) to a support (52 or 53) of the spreading means (47) which allows a variation in the position of the axis (75) of rotation between the push-and-pull rod (71) and the support (52 or 53).

18. A round baling press according to claim 17, characterised in that the rotatably and pivotally movable connection (74) is constituted by a link guide (69) which has at least one lockable supporting position.

19. A round baling press according to claims 17 and 18, characterised in that the link guide (69) is so designed that the link (69.1) is present in or on the push-and-pull rod (71) and a guide member guided in the link (69.1) is present on the support (52 or 53) in an embodiment as a roller, a bolt (68) or the like.

20. A round baling press according to one of claims 17 to 19, characterised in that the link guide (69) substantially corresponds to the form of a large sigma (Σ) in Greek script.

21. A round baling press according to one of claims 1 to 20, characterised in that the braking force of the braking means (33) associated with the material roll (31) and the force needed to lock the supporting position (72, 73) of the guide member in the link guide (69) is transmitted to the push-and-pull rod (71) by a common spring (84).

## Revendications

1. Presse à balles rondes (1) comprenant des éléments d'enroulement (25) délimitant à la périphérie la chambre d'enroulement (10) en laissant une ouverture d'entrée de produit (26) et un dispositif de dévidage et d'alimentation (28) pour dévider une bande enveloppe (29) de longueur déterminée, à partir d'un rouleau (31) chargé dans un réservoir d'alimentation et/ou porté par un support de rouleau (30), et pour conduire la bande enveloppe (29) dans la chambre d'enroulement (10) afin d'enrouler la périphérie d'une balle terminée, tandis qu'au dispositif de dévidage et d'alimentation (28) est associée une installation de coupe (32) et au rouleau (31) est associée une installation de freinage (33), ainsi qu'une installation (47) d'étalement transversal de la bande dévidée avant son entrée dans la chambre d'enroulement (10), cette installation (47) étant prévue transversalement à l'axe longitudinal de la machine et occupant au moins la largeur de la balle à envelopper,
caractérisée en ce que
l'installation (47) d'étalement transversal de la bande enveloppe (29) est montée de manière pivotante sur le carter (11) de la presse (1) et, sous l'effet de la traction de dévidage de la bande enveloppe (29), elle effectue elle-même un mouvement de basculement et est couplée par des organes de liaison (70) à l'installation de freinage (33) du rouleau (31) pour que l'amplitude de la force de freinage soit définie par l'amplitude de la traction de dévidage de la bande enveloppe (29).

2. Presse à balles rondes selon la revendication 1,
caractérisée en ce que
l'amplitude de la force de freinage et celle de la traction de dévidage sont inversement proportionnelles.

3. Presse à balles rondes selon l'une quelconque des revendications 1 et 2,
caractérisée en ce que
l'installation (47) d'étalement transversal de la bande enveloppe (29) comporte comme cylindre de déviation et/ou de guidage, l'un des cylindres d'avancée (38, 39) du dispositif de dévidage et d'alimentation (28).

4. Presse à balles rondes selon l'une quelconque des revendications 1 à 3,
caractérisée en ce que
l'installation (47) d'étalement transversal de la bande enveloppe (29) comporte un élément de renvoi (48) s'étendant au moins sur la largeur de la balle à envelopper, dont les extrémités se poursuivent par des éléments d'étalement (50, 51), qui font un angle d'inclinaison (α) par rapport à l'axe géométrique (49) de l'élément de renvoi (48) en étant entraînés en rotation par la bande enveloppe (29), et qui assurent un étalement de la bande enveloppe (29) dans une zone d'enveloppement entre un point d'arrivée (60) et un point de sortie (61).

5. Presse à balles rondes selon la revendication 4,
caractérisée en ce que
l'installation (47) d'étalement transversal de la bande enveloppe (29) comporte un dispositif prévu sur le carter assurant un enveloppement de la bande enveloppe (29) sur un angle d'enveloppement (β).

6. Presse à balles rondes selon l'une quelconque des revendications 4 et 5,
caractérisée en ce que
l'amplitude de l'étalement (S) de la bande enveloppe (29) dépend de la valeur de l'angle d'inclinaison (α).

7. Presse à balles rondes selon l'une quelconque des revendications 4 à 6,
caractérisée en ce que
l'élément de renvoi (48) de l'installation d'étalement transversal (47) est monté pivotant par des supports (52, 53) sur les parois latérales (13, 14) du carter (11).

8. Presse à balles rondes selon l'une quelconque des revendications 4 à 7,
caractérisée en ce que
l'élément de renvoi (48) est en forme de corps tubulaire (55) de section circulaire.

9. Presse à balles rondes selon l'une quelconque des revendications 4 à 8,
caractérisée en ce que
le corps tubulaire (55) sert de support aux éléments d'étalement (50, 51).

10. Presse à balles rondes selon l'une quelconque des revendications 4 à 9,
caractérisée en ce que
les éléments d'étalement (50, 51) montés libres en rotation sur un arbre (57) sont reliés au corps tubulaire (55) par un support (56).

11. Presse à balles rondes selon l'une quelconque des revendications 4 à 10,
caractérisée en ce que
les éléments d'étalement (50, 51) sont des rouleaux (58, 59).

12. Presse à balles rondes selon l'une quelconque des revendications 4 à 11,
caractérisée en ce que
les rouleaux (58, 59) ont une surface munie d'un revêtement en matière élastique.

13. Presse à balles rondes selon la revendication 12,
caractérisée en ce que
les rouleaux (58, 59) ont un revêtement de surface en caoutchouc.

14. Presse à balles rondes selon l'une quelconque des revendications 4 à 13,
caractérisée en ce que
l'installation (47) d'étalement transversal de la bande enveloppe (29) est réalisée avec l'élément de renvoi (48) monté libre en rotation dans les supports (52, 53) sur les parois latérales (13, 14) du carter (11).

15. Presse à balles rondes selon l'une quelconque des revendications 1 à 14,
caractérisée en ce que
le dispositif de frein (33) associé au rouleau de bande (31) est un frein à friction.

16. Presse à balles rondes selon l'une quelconque des revendications 1 à 15,
caractérisée en ce que
l'installation de frein (33) est une roue freinée (77) comportant un levier de frein (78) muni d'un patin de frein (79) et couplé à l'installation (47) d'étalement transversal de la bande enveloppe (29), par un couplage à mouvement basculant au moyen d'une tige de traction et de poussée (71) formant un organe de liaison (70).

17. Presse à balles rondes selon l'une quelconque des revendications 1 à 16,
caractérisée en ce que
la tige de traction et de poussée (71) formant un organe de liaison (70) comporte à une extrémité, un point de liaison (74) mobile en rotation et en pivotement avec un support (52 ou 53) de l'installation d'étalement transversal (47), autorisant un changement de position de l'axe de rotation (75) entre la tige de traction et de poussée (71) et le support (52 ou 53).

18. Presse à balles rondes selon la revendication 17,
caractérisée en ce que
le point de liaison (74) mobile en rotation et en pivotement est formé par une coulisse de guidage (69) ayant au moins une position de fixation susceptible d'être bloquée.

19. Presse à balles rondes selon l'une quelconque des revendications 17 ou 18,
caractérisée en ce que
la coulisse de guidage (69) est réalisée de façon que la coulisse (69.1) se trouve sur la tige de traction et de poussée (71) et un galet de guidage guidé par la coulisse (69.1) sous la forme d'un rouleau ou d'un goujon (68) ou un moyen analogue est prévu sur le support (52, 53).

20. Presse à balles rondes selon l'une quelconque des revendications 17 à 19,
caractérisée en ce que
la coulisse de guidage (69) correspond à la forme de la lettre grecque sigma (Σ)

21. Presse à balles rondes selon l'une quelconque des revendications 1 à 20,
caractérisée en ce qu'
un ressort commun (84) transmet la force de freinage de l'installation de frein (33) associée au rouleau de bande (31) et la force de blocage de la position de fixation (72, 73) de l'organe de guidage dans la coulisse de guidage (69) de la tige de traction et de poussée (71).
